# EUROPÄISCHE PATENTSCHRIFT

(11) **EP 1 619 057 B1**
(45) Veröffentlichungstag und Bekanntmachung des Hinweises auf die Patenterteilung: **21.11.2012**
(21) Anmeldenummer: 05014624.0
(22) Anmeldetag: 06.07.2005
(51) Int. Cl.: B60J 1/20

(54) **Anordnung für Seitenfensterrollo**
Roller blind assembly for side window
Agencement de store pare-soleil pour vitre latérale

(30) Priorität: 24.07.2004 DE 102004036075
(43) Veröffentlichungstag der Anmeldung: 25.01.2006
(73) Patentinhaber: BOS GmbH & Co. KG, 73760 Ostfildern (DE)
(72) Erfinder: Hansen, Melf, 75053 Gondelsheim (DE); Maier, Matthias, 73733 Esslingen (DE); Walter, Herbert, 73061 Ebersbach (DE)
(74) Vertreter: Rüger, Barthelt & Abel

(56) Entgegenhaltungen:
- EP-A- 1 304 246
- EP-A1- 1 129 871
- EP-A1- 1 306 251
- DE-A1- 3 822 378
- DE-A1- 10 334 721
- US-A1- 5 782 284

## Beschreibung

Mit zunehmenden Komfortanforderungen an Kraftfahrzeuge entsteht auch ein Bedarf für eine weitgehende Abschattung von Seitenfenstern an Kraftfahrzeugen. Dabei sind insbesondere solche Seitenfenster problematisch, die in mehrere Felder aufgeteilt sind. Beispiele sind die Seitenfenster von normalen Limousinen. Hier sind die hinteren Seitenfenster in ein, zumindest angenähert, trapezförmiges oder rechteckiges Feld, und ein, zumindest angenähert, dreieckiges Feld aufgeteilt. Die Abschattung des viereckigen Feldes bereitet in aller Regel keine Probleme.

Es sind auch zwischenzeitlich Lösungen bekannt, um das dreieckige Feld des Fensters abzuschatten. Siehe hierzu beispielsweise die EP 1 306 251 A1 und EP11129871. In dieser Druckschrift ist beschrieben, wie ein Seitenfensterrollo für den dreieckförmigen Bereich auszuführen ist.

Das Rollo umfasst zwei Wickelwellen. Eine der Wickelwellen verläuft parallel zu der horizontalen Fensterunterkante und nimmt die Rollobahn des viereckigen Fensterabschnitts auf. Für diesen Abschnitt sind zwei parallel zueinander sich erstreckende Führungsschienen vorgesehen, von denen eine in der Fensterstrebe untergebracht ist, die das Seitenfenster in die beiden Abschnitte aufteilt.

Neben dieser Fensterstrebe ist an dem Fensterrahmen ebenfalls die andere Wickelwelle gelagert, die die Rollobahn für den dreiekförmigen Fensterabschnitt aufwickelt.

Im Bereich der Unterkante des dreieckförmigen Fensterabschnitts, d.h. an der unteren Fensterbrüstung, befindet sich eine Führungsschiene, an der ein Formstück geführt ist. Das Formstück dient gleichzeitig als Auszugsprofil um die dreickeförmige Rollobahn von der Wickelwelle abzuziehen. Die Wickelwelle enthält einen Federmotor, durch den die Wickelwelle im Sinne eines Aufwickelns der Rollobahn vorgespannt ist.

Die einzige Struktur, die sämtliche Teile des Rollos miteinander verbindet ist der Türkorpus oder der Fensterrahmen.

Die Bewegung des Formstücks längs der Führungsschiene erfolgt mit Hilfe eines ausknicksicher geführten linienförmigen Druckglieds, in Gestalt einer Suflexwelle°. Eine derartige Anordnung ist ähnlich einem Bowdenzug ausgeführt.

Die Bewegung der Suflexwelle geschieht mit Hilfe eines Getriebemotors, dessen Ausgangszahnrad in die Verzahnung der Suflexwelle eingreift.

Aus der EP 1 129 871 A1 ist es ferner bekannt die Fensterstrebe, die das hintere Seitenfenster in die beiden Abschnitte aufteilt, sowohl als Führungsschiene als auch als Gehäuse für die betreffende Wickelwelle auszugestalten. Im Übrigen sind auch hier die Führungsschienen jede für sich an der Seitentür gehaltert.

Ersichtlicherweise sind bei den bisherigen Lösungen die beiden Rollos für das viereckige Fensterfeld und für das dreieckige Fensterfeld weitgehend getrennt voneinander, was zu erheblicher Raumnot für den Konstrukteur führt. Weiters ist die Montage erschwert, weil es keine Teile gibt, die die Fluchtung vor und während der Montage zwangsläufig sicherstellen.

Ausgehend hiervon ist es Aufgabe der Erfindung eine Rolloanordnung für ein Seitenfenster zu schaffen, das platzsparender und leichter zu montieren ist.

Diese Aufgabe wird erfindungsgemäß durch eine Seitenfensterrolloanordnungen mit den Merkmalen des Anspruches 1 gelöst.

Bei der neuen Anordnung sind zwei getrennte Rollowellen vorgesehen, wobei an jeder Rollowelle jeweils eine zugehörige Rollobahn verankert ist. Ferner sind wenigstens zwei Führungsschienen vorhanden, von denen jeweils eine einer entsprechenden Rollobahn zugeordnet ist. Die beiden Führungsschienen laufen im Winkel zueinander, ebenso wie dies die beiden Rollowellen tun. Der Winkel richtet sich nach dem Winkel, den die Schiene, die das Fenster in die Felder aufteilt, mit der unteren Fensterbrüstung einschließt. Um die Rollobahnen bzw. Wickelwellen möglichst dicht aneinander zu bringen, ist ein Zentralstück vorhanden, das Befestigungseinrichtungen für wenigstens die beiden Führungsschienen sowie wenigstens eine Lagereinrichtung für wenigstens eine der Rollowellen aufweist.

Platzsparender werden die Verhältnisse, wenn der einen Wickelwelle ein Gehäuse zugeordnet ist, das zwei Endkappen aufweist. Eine der Endkappen ist von dem Zentralstück gebildet.

Speziell in dem vorausgehenden Fall ist es günstig, wenn in dem Zentralstück zusätzlich ein Lagerzapfen für die betreffende Wickelwelle enthalten ist.

Der Winkel, den die Führungsschienen miteinander einschließen, liegt in der Nähe von 90°. Dasselbe trifft auch für die Wickelwellen zu, wobei der Winkel zwischen den Wickelwellen nicht notwendigerweise mit dem Winkel zwischen den Führungsschienen übereinzustimmen braucht.

Die Platzverhältnisse werden weiter verbessert, wenn ein Gehäuse vorhanden ist, in dem sowohl die zweite Wickelwelle als auch eine Führungsschiene für die erste Rollobahn enthalten bzw. ausgebildet sind.

Um die Rollobahnen jeweils wieder auf die Wickelwelle aufzuwickeln, ist vorteilhafterweise der betreffenden Wickelwelle ein Federmotor zugeordnet, durch den die betreffende Wickelwelle im Sinne des Aufwickelns der jeweiligen Rollobahn vorgespannt ist.

Die erste Rollobahn, beispielsweise diejenige, die vor dem rechteckigen Feld des Seitenfensters verläuft, kann ein- oder beidends in Führungsschienen geführt sein. Die beidseitige Führung vermeidet Schwingungen und ist gegen Fehlbedienungen sehr robust.

Hierzu ist eine Zugstabanordnung vorhanden, die beidends in den Führungsschienen läuft.

Die Antriebseinrichtung für die erste Rollobahn bzw. diejenige Rollobahn, die vor dem viereckigen Fenster verläuft, umfasst zweckmäßigerweise zwei ausknicksicher geführte, linienförmige Schubglieder, die über einen Elektromotor angetrieben sind.

Wenn die Oberkante des viereckigen Feldes des Fensters nicht parallel zu der Unterkante verläuft, ist die Wickelwelle zweckmäßigerweise zumindest angenähert konisch. Auf diese Weise wird sichergestellt, dass die Oberkante der Rollobahn vollständig im Türinneren verschwindet, ohne dass ein übermäßiger Hub erforderlich ist oder die Wickelwelle sehr tief angeordnet werden muss.

Günstigerweise sind an dem Zentralstück ein oder zwei Aufnahmesitze zur Befestigung der betreffenden Hülle des ausknicksicher geführten Schubglieds vorhanden.

Wenn die verschiedenen Kanten der beiden Rollobahnen jeweils unterschiedliche Strecken zurücklegen, ist vorteilhafterweise ein Getriebemotor vorhanden, der drei Ausgangszahnräder trägt. Jedes Ausgangszahnrad ist dazu vorgesehen, das betreffende Schubglied zu betätigen. Der Wirkdurchmesser des betreffenden Zahnrades ist so abgestimmt, dass sämtliche Kanten der Rollobahn oder Eckpunkte nahezu gleichzeitig ihre Endposition erreichen. Kleine Wegdifferenzen lassen sich über eine Totweg kompensieren.

Im Übrigen sind Weiterbildungen der Erfindung Gegenstand von Unteransprüchen.

Es sind eine Reihe von Abwandlungen möglich, die sich in naheliegender Weise aus den jeweiligen Randbedingungen ergeben. Beim Durchlesen der Figurenbeschreibung mit dem erläuterten Ausführungsbeispiel wird dies im übrigen klar.

In der Zeichnung ist ein Ausführungsbeispiel des Gegenstandes der Erfindung dargestellt. Es zeigen:
- Fig. 1: den aufgebrochen veranschaulichen Heckbereich eines Kraftfahrzeugs mit Blick auf die Innenseite der hinteren rechten Seitentür;
- Fig. 2: die Grundelemente des Seitenfensterrollos, in einer schematisierten Explosionsdarstellung und
- Fig. 3: eine prinzipielle Darstellung des Antriebs der linearen Schubglieder des Seitenfensterrollos nach Fig. 2.

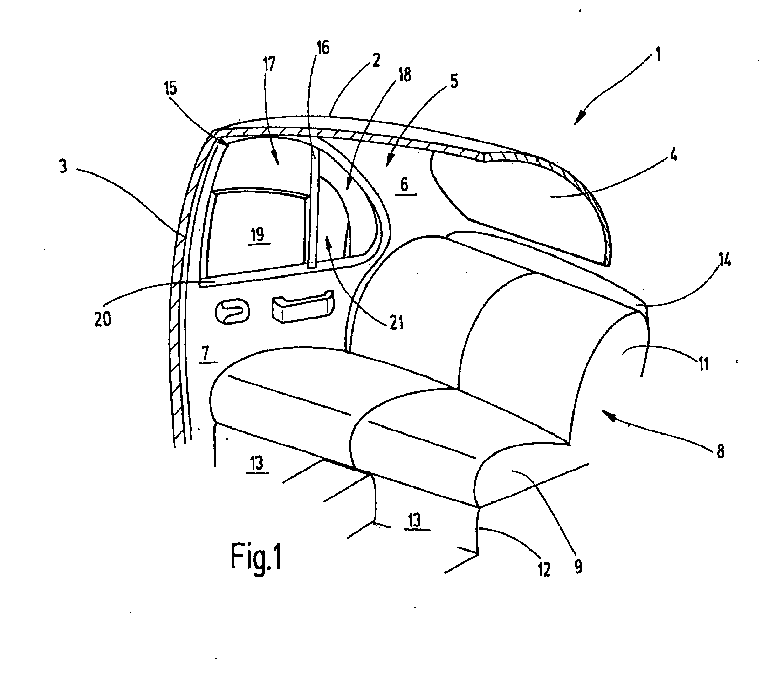

Fig. 1 stellt den aufgebrochenen, abgeschnittenen Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht. So sind beispielsweise Karosserieinnenstrukturen, wie Versteifung und Befestigungsmittel nicht gezeigt, da ihre Darstellung für das Verständnis der Erfindung nicht erforderlich ist. Ebenso ist die Darstellung der Karosserie schematisiert und lässt die dort vorhandenen Hohlräume nicht erkennen.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster an einer C-Säule 5, die sich im Abstand zu der B-Säule 3 befindet. Die C-Säule 5 trägt eine Innenverkleidung 6.

Zwischen der B-Säule 3 und der C-Säule 5 ist an der B-Säule 3 eine hintere, rechte Seitentür 7 in bekannter Weise anscharniert.

Auf der Höhe der hinteren, rechten Seitentür 7 befindet sich eine Rücksatzbank 8, zu der eine Sitzfläche 9 sowie eine Rücksitzlehne 11 gehören. Die Rücksitzfläche 9 liegt auf einer Sockelfläche 12, die zu der Bodengruppe gehört und vor der Fußräume 13 ausgebildet sind.

Auf der Höhe der Oberkante der Rücksitzlehne 11 erstreckt sich eine Hutablage 15 zu der Unterkante der Heckscheibe 4.

Die hintere, rechte Seitentür ist in der für Limousinen üblichen Weise mit einem Seitenfenster 15 versehen. Das Seitenfenster 15 wird durch eine etwa vertikal verlaufende Strebe 16 in ein im wesentlichen viereckiges Fensterfeld 17 sowie ein etwa dreieckiges Fensterfeld 18 aufgeteilt. Am unteren Ende werden die beiden Felder 17 und 18 von einer durchlaufenden Fensterbrüstung 19 begrenzt.

Die in dem Fensterfeld 17 vorhandene Scheibe ist in der bekannten Weise auf und ab zu bewegen, wozu sie unter anderem in der vertikalen Strebe 16 in bekannter Weise geführt ist. Die in dem dreieckigen Fensterfeld 18 vorhandene Scheibe ist starr angeordnet.

Beide Fensterfelder 17 und 18 sind durch jeweils zugeordnete Rollobahnen 19 und 21 abzuschatten. Der Antriebsmechanismus für die beiden Rollobahnen 19 und 21 befindet sich in dem Innenraum der Tür 7 unterhalb der Fensterbrüstung 19.

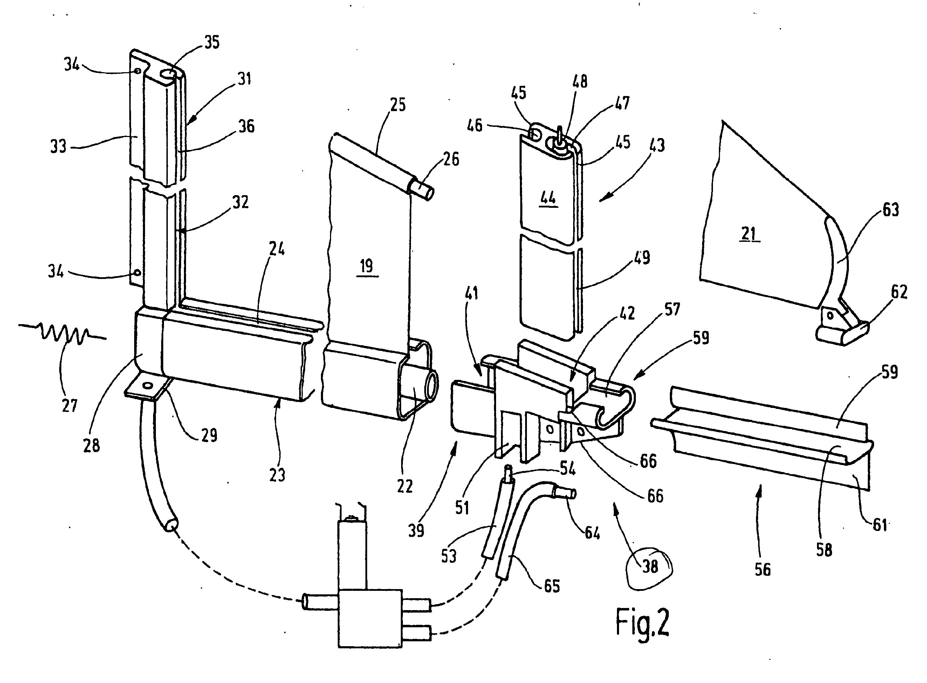

Fig. 2 zeigt die wesentlichen Bestandteile, die dazu vorgesehen sind, die beiden Rollobahnen 19 und 21 anzutreiben, zu führen bzw. im nicht gebrauchten Zustand aufzubewahren.

Die Rollobahn 19 weist einen Zuschnitt auf, der etwa der Fläche des Fensterfeldes 17 entspricht. Sie ist mit ihrer Unterkante an einer Wickelwelle 22 befestigt, die in einem Gehäuse 23 enthalten ist. Das Gehäuse 23 befindet sich unterhalb der Fensterbrüstung 20 im Türinneren und öffnet sich an einem Gehäuseschlitz 24 nach oben, durch den hindurch die Rollobahn 19 ausziehbar ist. Der Gehäuseschlitz 24 fluchtet mit einem Schlitz in der Fensterbrüstung. Die von der Wickelwelle 22 abliegende Kante der Rollobahn 19 ist mit einer schlauchförmigen Schlaufe 25 versehen, die ein Auszugsprofil 26 aufnimmt. Das Auszugsprofil 26 ist im vorliegenden Fall im Wesentlichen eine formsteife Stange, die dazu eingerichtet ist, die Oberkante der Rollobahn 19 zu führen und auszusteifen.

Im Inneren der Wickelwelle 22 befindet sich ein schematisch angedeuteter Federmotor 27, der einends mit der Wickelwelle 22 verbunden ist und anderenends karosseriefest verankert ist. Mit Hilfe des Federmotors 27 wird die Wickelwelle 22 im Sinne des Aufwickelns der Rollobahn 19 vorgespannt.

Das Gehäuse 23 wird an der linken Seite, also an jener Seite, die der B-Säule 3 benachbart ist, durch eine Endkappe 28 verschlossen. Die Endkappe 28 ist mit einer Befestigungslasche 29 versehen, um die Endkappe 28 innerhalb der Tür 7 fest zu schrauben oder fest zu nieten.

Von der Oberseite der Endkappe 28 geht eine Führungsschiene 31 aus, in der eine hinterschnittene Führungsnut 32 ausgebildet ist. Die Führungsschiene 31 verläuft an der Innenseite der in dem Fensterfeld 17 enthaltenen versenkbaren Fensterscheibe, und zwar unmittelbar innerhalb der Türverkleidung der Tür 7 neben der B-Säule 3. Somit ist die Führungsschiene 31 nach außen hin praktisch nicht sichtbar. Sie folgt in ihrem Verlauf in gekrümmter Weise dem Verlauf der Führungsschiene für die versenkbare Scheibe in dem Fensterfeld 17.

Um die Führungsschiene 31 zu befestigen ist sie an ihrer Rückseite mit einem leistenartigen Flansch 33 versehen, der über Bohrungen 34 verfügt, durch die hindurch die Führungsschiene 31 an dem tragenden Teil der Tür 7 zu befestigen ist.

Die hinterschnittene Führungsnut 32 setzt sich aus einer im Querschnitt kreisförmigen Nutenkammer 35 und einem spaltförmigen Schlitz 36 zusammen. Durch den Schlitz 36 ragt das Auszugsprofil 26 mit seinem betreffenden Ende in die Nutenkammer 35

In der kreisförmigen Nutenkammer 35 ist ausknicksicher eine weiter unten noch beschriebenes lineares Schubglied ausknicksicher geführt. Dieses Schubglied dient dazu, die Rollobahn 20 gegen die Wirkung des Federmotors 27 auszufahren.

Am gegenüberliegenden Ende des Gehäuses 23 befindet sich ein Zentralstück 38, das unterhalb der Strebe 16 im Inneren der Tür und unterhalb der Fensterbrüstung 19 an den tragenden Teilen der Tür 7 befestigt ist. Dieses Zentralstück 38 weist an einem Ende eine Struktur 39 auf, die dazu eingerichtet ist, als andere Endkappe für das Gehäuse 23 zu wirken. U.a. befindet sich in dieser Struktur 39, die etwa rohrförmig gestaltet ist, mittig ein nicht weiter erkennbarer Zapfen, auf dem das betreffende Ende der Wickelwelle 22 drehbar gelagert ist. Die Struktur 39 bildet insoweit einen Gehäusesitz, der sich auch nach oben in einem Spalt 41 öffnet. In den Gehäusesitz 39 ist das Gehäuse 23 eingesteckt.

Neben dem Gehäusesitz 39 weist das Zentralstück 38 einen weiteren Sitz oder Aufnahme 42 auf, der der Halterung eines strebenförmigen Gehäuses 43 dient und der sich nach oben öffent. Das strebenförmige Gehäuse 43 ist, wie die Figur erkennen lässt, im Querschnitt gesehen etwa rechteckig mit abgerundeten Ecken. Es wird von zwei einander gegenüberliegenden Flachseiten 44 und zwei einander gegenüberliegenden Schmalseiten 45 begrenzt. Im montierten Zustand verläuft das strebenförmige Gehäuse vor der Führungsstrebe 16 für die bewegliche Scheibe. D.h. jener Teil, der in Fig. 2 erkennbar ist, stellt an sich das strebenförmige Gehäuse 43 dar.

In dem strebenförmigen Gehäuse 43 ist auf jener Schmalseite 45 die der Führungsschiene 31 zugekehrt ist, eine Führungsnut 46 enthalten, die die gleiche Querschnittsgestalt hat, wie die Führungsnut 32. Auch in diese Führungsnut 36 ragt das Auszugsprofil 26 mit einem über die Rollobahn 20 überstehenden Ende.

In dem zylindrischen Teil, d.h. in der Nutenkammer 35 der Führungsnut 46 ist, wie bereits erwähnt, ein eigenes, linienförmiges Schubglied ausknicksicher geführt.

Auf der gegenüberliegenden Seite bildet das strebenförmige Gehäuse 43 einen zylindrischen Innenraum 47, in dem eine weitere Wickelwelle 48 drehbar gelagert ist. An der Wickelwelle 48 ist mit einer Kante die Rollobahn 21 befestigt, die einen etwa dreieckförmigen Zuschnitt hat. Die Wickelwelle 48 wird in der gleichen Weise durch einen eigenen veranschaulichten Federmotor, der dem Federmotor 27 entspricht, im Aufwickelsinne vorgespannt. Die Rollobahn 21 führt durch einen Rolloschlitz 49 in das strebenförmige Gehäuse 43 in die dort vorhandene Kammer 47 hinein.

Das strebenförmige Gehäuse 43 ist in dem Sitz 42 durch nicht weiter dargestellte, dem Fachmann jedoch bekannte Rastmittel und Rasthaken lagerichtig verankert.

In Verlängerung der Führungsnut 46 enthält das Zentralteil 38 einen Aufnahmesitz 51, der eine mit der Führungskammer der Führungsnut 46 fluchtende durchgehende Bohrung aufweist, die wegen der Darstellung nicht erkennbar ist.

In dem Sitz 51 wird eine Hülle 53 lagerichtig verankert, in der ein linienförmiges Schubglied 54 geführt ist. Im montierten Zustand fluchtet die Hülle 53 mit der Führungskammer in der Führungsnut 46.

Im montierten Zustand verläuft das strebenförmige Gehäuse 43 etwa rechtwinklig zu der Längserstreckung des Gehäuses 23 der Wickelwelle 22. Die Achse der Wickelwelle 22 und die Längsachse des strebenförmigen Gehäuses 43 liegen etwa in derselben Ebene.

In Richtung auf die Hinterkante der Tür 7 schließt sich an den Sitz 42 des Zentralteils 38 ein Sitz 55 an, der der endseitigen Haltungen einer Führungsschiene 56 dient. Der Sitz 55 ist ein etwa rohrförmiger Fortsatz, der nach oben zu über einen Schlitz 57 offen ist. Die Querschnittsgestalt der lichten Öffnung des Fortsatzes 55 entspricht etwa der Querschnittsgestalt der Außenkontur der Schiene 56. Die Führungsschiene 56 erstreckt sich unter dem dreieckigen Fensterfeld 18.

Die Querschnittsgestalt der Führungsschiene 56 ist etwa oval, entsprechend einer Rennbahn, wobei das Profil liegend angeordnet ist. Neben einer Kante eines nach oben offenen Schlitzes 58 schließt sich eine Befestigungsleiste 59 an. Eine weitere Befestigungsleiste 61 ist unterhalb vorgesehen. In der Führungsschiene 56 gleitet ein Mitnehmer 62, der an der spitz zulaufenden Vorderkante der Rollobahn 21 vorgesehen ist. Die Rollobahn 21 ist über ein starres Konturteil 63, das mit der Rollobahn verschweißt ist, scharnierartig mit dem Mitnehmer 62 verbunden.

Um den Mitnehmer 62 im Sinne eines Aufspannens der Rollobahn 21 vorzuschieben, ist ein weiteres ausknicksicher geführtes Schubglied 64 vorhanden, das in einer zugeordneten Hülle 65 geführt ist. Zur Halterung weist das Zentralteil 38 einen neben einer Seite des Sitzes 55 enthaltene Aufnahmenut 66 auf, die derart platziert ist, dass das Schubglied 64 in die Führungsnut der Führungsschiene 56 knickfrei eindringen kann. Dort kommt das freie Ende des Schubgliedes 54 mit dem Mitnehmer 62 in Eingriff.

Um die Darstellung nicht mit überflüssigen Details, die für das Verständnis der Erfindung unnötig sind, zu überladen, sind Klemmschellen, Versteifungsstreben und dergleichen nicht weiter gezeigt.

Um das Zentralstück 38 in der Tür zu verankern, ist es unterhalb des Sitzes 42 sowie des Sitzes 55 mit Streben 67 versehen, die eine leichte Befestigung an den tragenden Strukturen der Tür 7 ermöglichen.

Das Zentralstück 38 ist ein Kunststoffspritzteil, womit es ohne weiteres möglich ist, die erforderlichen Hinterschnitte oder Federhaken auszubilden, die notwendig sind, um das Gehäuse 23, das strebenförmige Gehäuse 43 und die Führungsschiene 56 lagerichtig und zuverlässig zu verankern. Wie solche Hinterschnitte und Federhaken ausgebildet werden müssen, ist dem Fachmann bekannt und braucht deswegen hier nicht dargestellt zu werden.

Durch die Verwendung des Zentralstücks 38 wird eine kompakte Bauweise erreicht, weil die Führungsschiene 56 sehr dicht an das Gehäuse 23 herangerückt werden kann. Die einander benachbarten Enden dieser beiden Bauteile werden gemeinsam durch das Zentralstück 38 an den tragenden Strukturen der Tür befestigt. Voneinander getrennte und platzbeanspruchende Befestigungselemente werden somit nicht benötigt. Dasselbe gilt auch für die untere Befestigung des strebenförmigen Gehäuses 43, womit insgesamt nur eine Befestigung erforderlich ist, um drei Gehäuse bzw. Führungsschienen gemeinsam an der Tür anzubringen. Neben der dadurch entstehenden Platzersparnis, wird auch die lagerichtige Fixierung der Teile zueinander gewährleistet, weil sie durch die Gestalt des Zentralstücks 38 festgelegt ist.

Es werden auch keine zusätzlichen Befestigungen benötigt, um in diesem Bereich die dort erforderlichen beiden Hüllen 53 und 65 anzubringen. In diesen Hüllen laufen die Schubglieder 54 und 64, die erforderlich sind, um einerseits die Spitze der Rollobahn 21 zu bewegen und die Rollobahn 19, auf der dem strebenförmigen Gehäuse 43 benachtbarten Seite anzutreiben.

Hinsichtlich der Details, wie die dreieckförmige Rollobahn 21 im Einzelnen bewegt wird und in der Endlage gespannt wird, wird auf die DE 103 54 233 A1 verwiesen, auf die hier ausdrücklich Bezug genommen ist.

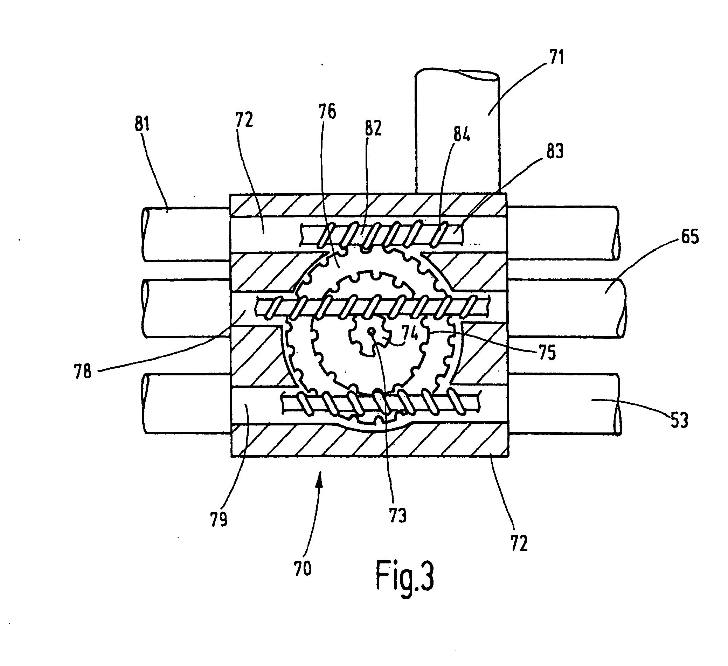

Fig. 3 zeigt, stark schematisiert, einen elektrischen Antrieb 70, um die beiden Rollobahnen 19 und 21 in Bewegung zu setzen.

Der elektrische Antrieb 70 umfasst einen Elektromotor 71, der ein in einem Gehäuse 72 angeordnetes Zahnradgetriebe in Gang setzt.

Auf eine Ausgangswelle 73 des Getriebes, sitzen insgesamt drei Antriebszahnräder 74, 75 und 76, die unterschiedlichen Wirkdurchmesser haben. An jedem der Zahnräder 74, 75 und 76 führt tangential auf der entsprechenden Höhe ein Kanal 77, 78 und 79 vorbei, der das Gehäuse 72 durchsetzt. Auf der Höhe der betreffenden Kanäle 77, 78, 79 münden die Hüllen 53 und 65.

Eine weitere Hülle 81 führt von dem Getriebegehäuse 72 zu der Endkappe 28 und enthält ein knicksteif geführtes lineares Schubglied 82, das mit seinem freien aktiven Ende in der Kammer 35 läuft.

Jedes der Schubglieder 54 und 64 und 82 setzt sich aus einer flexiblen, etwa zylindrischen Seele 83 und einer darauf angeordneten Wendel 84 zusammen. Die Wendel 84 bildet eine Rippe, die schraubenförmig um die Seele 83 herumläuft und mit dieser unbeweglich verbunden ist. Auf diese Weise wird eine Art schräg verzahnter rotationssymmetrische Zahnstange erzielt, die in allen Richtungen gleich biegsam ist. Die Zahnräder 74, 75, 76 sind wie erkennbar mit ihrer Verzahnung an das Profil der "Zahnstange" angepasst und ermöglichen eine formschlüssige Kupplung mit dem Antriebsmotor 71 und auch eine formschlüssige Kupplung der Schubglieder 54, 64 und 82 untereinander.

Da die Zahnräder, wie gezeigt, alle unterschiedlichen Wirkdurchmesser haben, wird bei einer gegebenen Anzahl Umdrehungen jeweils ein unterschiedlicher Weg zurückgelegt. Da das Fensterfeld 17 neben der B-Säule 3 die größte Erstreckung hat, muss die entsprechende Kante der Rollobahn 19 den größten Weg zurücklegen. Entsprechend ist das Antriebsrad 76 dort mit dem größten Durchmesser versehen. Die Kante der Rollobahn 19 neben der Führungsschiene 16 bzw. dem strebenförmigen Gehäuse 43 legt einen etwas kürzeren Weg zurück, weshalb das Zahnrad 75, das zum Antrieb des Schubgliedes 54 dient, einen kleineren Wirkdurchmesser aufweist.

Den kleinesten Durchmesser hat das Zahnrad 74, das zum Antrieb der Rollobahn 21 vorgesehen ist.

Durch Ingangsetzten des Motors 71 werden die betreffenden Schubglieder 54, 64 und 82 in der einen oder in der anderen Richtung in Bewegung gesetzt. Zum Ausfahren werden sie in Richtung der betreffenden Führungsschienen 31, 43 und 56 vorgeschoben. Dabei schieben sie entweder die dort vorhandenen Enden des Auszugsprofils 26 oder den Mitnehmer 62 vor sich her. Hierdurch wird die betreffende Rollobahn 19, 21 gegen die Wirkung der betreffenden Federmotoren 27 von der zugehörigen Wickelwelle 22 bzw. 48 abgewickelt. Durch die Wahl der Zahnradgrößen erreichen alle Schubglieder 54, 64, 82 gleichzeitig ihre Endstellung.

Zum Einfahren werden die Schubglieder 54, 64, 82 durch den Antriebsmotor 71 in der entgegengesetzten Richtung in Bewegung gesetzt. Sie werden aus den Führungsschienen 31, 43, und 56 zurückgezogen. Die Federmotoren 27 sind damit in der Lage, die Wickelwellen im Sinne eines Aufwickelns der Rollobahn 19 bzw. 21 zu drehen.

Durch die formschlüssige Kupplung wird ständig die Synchronität zwischen den Bewegungen aufrecht erhalten.

Ein Seitenfensterrollo setzt sich aus zwei Rollobahnen zusammen, die beide auf voneinander unabhängige Wickelwellen aufgewickelt werden. Die Wickelwellen sind im Winkel zueinander angeordnet und entsprechen auch die zugehörigen Führungsschienen. Um Platz zu sparen und eine lagerichtige Fixierung an jener Stelle zu erreichen, an der die Rollobahnen zusammenstoßen, ist ein Zentralstück vorhanden, das Sitze für die Wickelwellengehäuse der beiden Rollobahnen und auch Sitze für die an dieser Stelle zusammentreffenden Führungsschienen der beiden Rollobahnen aufweist.

Außerdem können in dem Zentralstück die Hüllen der Druckglieder verankert werden.

## Patentansprüche

1. Fensterrolloanordnung für durch vertikale Strobe Seitenfenster (15) in Seitentüren (7), in Kraftfahrzeugen,
mit einer ersten Wickelwelle (22), an der mit einer Kante eine erste Rollobahn (19) befestigt ist,
mit einer zweiten Wickelwelle (48), an der mit einer Kante eine zweite Rollobahn (21) befestigt ist,
mit wenigstens einer ersten Führungsschiene (43) für die erste Rollobahn (19),
mit wenigstens einer zweiten Führungsschiene (56) für die zweite Rollobahn (21), **gekennzeichnet durch** die beiden Führungsschienen verbindendes Zentralstück (38), das Befestigungseinrichtungen (39,42,55) für wenigstens die beiden Führungsschienen (43,56) sowie wenigstens eine Lagereinrichtung (41) für wenigstens eine der Rollowellen (22,48) aufweist, wobei das Zentralstück (38) im montierten Zustand unterhalb der Strebe im Inneren der Tür und unterhalb der Fensterbrustung (20) an tragenden Teilen der Seitentür (7) befestigt ist.

2. Anordnung nach Anspruch 1, **dadurch gekennzeichnet, dass** der ersten Wickelwelle (22) ein Gehäuse (23) zugeordnet ist, das zwei Endkappen (28,39) aufweist, wobei eine Endkappe von dem Zentralstück (38) gebildet ist.

3. Anordnung nach Anspruch 1, **dadurch gekennzeichnet, dass** das Zentralstrück (38) einen Lagerzapfen für die erste Wickelwelle (22) enthält.

4. Anordnung nach Anspruch 1, **dadurch gekennzeichnet, dass** die beiden Wickelwellen (22,48) in einem Winkel zueinander angeordnet sind, der von 180° verschieden ist.

5. Anordnung nach Anspruch 4, **dadurch gekennzeichnet, dass** der Winkel in der Nähe von 90° liegt.

6. Anordnung nach Anspruch 1, **dadurch gekennzeichnet, dass** die zweite Wickelwelle (48) in einem Gehäuse (43) untergebracht ist.

7. Anordnung nach Anspruch 6, **dadurch gekennzeichnet, dass** das Gehäuse (43) für die zweite Wickelwe (48) eine Führungsschiene (46) für die erste Rollobahn (19) umfasst.

8. Anordnung nach Anspruch 1, **dadurch gekennzeichnet, dass** der zweiten Rollobahn (21) eine Führungsschiene (56) zugeordnet ist, die etwa in Verlängerung der ersten Wickelwelle (22) verläuft.

9. Anordnung nach Anspruch 1, **dadurch gekennzeichnet, dass** jeder Wickelwelle (22,48) ein Federmotor (27) zugeordnet ist, durch den die Wickelwelle (22, 48) im Sinne eines Aufwickelns der jeweiligen Rollobahn (19, 21) vorgespannt ist.

10. Anordnung nach Anspruch 1, **dadurch gekennzeichnet, dass** die erste Rollobahn (19) an einer Zugstabanordnung (26) befestigt ist, die sich an der von der Wickelwelle (22) abliegenden Kante der Rollobahn (19) befindet ist.

11. Anordnung nach Anspruch 10, **dadurch gekennzeichnet, dass** die Zugstabanordnung (26) beidends in Führungsschienen (31,46) geführt ist.

12. Anordnung nach Anspruch 10, **dadurch gekennzeichnet, dass** eine Antriebseinrichtung für die erste Rollobahn (19) vorgesehen ist, die zwei ausknicksicher geführte, linienförmige Schubglieder (54,82) umfasst, die mit dem Zugstab (26) zusammenwirken.

13. Anordnung nach Anspruch 1, **dadurch gekennzeichnet, dass** die erste Wickelwelle (22) zumindest angenähert konisch ist.

14. Anordnung nach Anspruch 1, **dadurch gekennzeichnet, dass** das Zentralstück (38) einen Aufnahmesitz (51) zur Befestigung einer Hülle (53) eines ausknicksicher geführten Schubglieds (54) für die erste Rollobahn (19) umfasst.

15. Anordnung nach Anspruch 1, **dadurch gekennzeichnet, dass** das Zentralstück (38) einen Aufnahmesitz (66) für - eine Hülle (65) eines ausknicksicher geführten Schubglieds (64) für die zweite Rollobahn (21) umfasst.

16. Anordnung nach Anspruch 1, **dadurch gekennzeichnet, dass** ein Antriebsmotor (71) vorgesehen ist, der für jedes Schubglied (54,64,82) ein Antriebszahnrad (74,75,76) aufweist, und dass die wirksamen Durchmesser der Antriebszahnräder (74,75,76) an den jeweiligen Hub angepasst sind.

17. Anordnung nach Anspruch 16, **dadurch gekennzeichnet, dass** sich die wirksamen Durchmesser aller Zahnräder (74,75,76) unterscheiden.

## Claims

1. Window roller blind arrangement for side windows (15) divided by vertical struts in side doors (7) in motor vehicles,
with a first winding shaft (22), to which a first blind sheet (19) is fastened at one edge, with a second winding shaft (48), to which a second blind sheet (21) is fastened at one edge,
with at least one first guide rail (43) for the first blind sheet (19),
with at least one second guide rail (56) for the second blind sheet (21),
**characterised by** a central piece (38), which connects the two guide rails and has fastening devices (39, 42, 55) for at least the two guide rails (43, 56) and also at least one bearing device (41) for at least one of the roller shafts (22, 48),
wherein in assembled state the central piece (38) is fastened to bearing parts of the side door (7) below the struts in the interior of the door and below the window ledge (20).

2. Arrangement according to claim 1, **characterised in that** the first winding shaft (22) has an associated housing (23), which has two end covers (28, 39), wherein one end cover is formed by the central piece (38).

3. Arrangement according to claim 1, **characterised in that** the central piece (38) contains a bearing journal for the first winding shaft (22).

4. Arrangement according to claim 1, **characterised in that** the two winding shafts (22, 48) are arranged at an angle to one another, which differs from 180°.

5. Arrangement according to claim 4, **characterised in that** the angle is in the vicinity of 90°.

6. Arrangement according to claim 1, **characterised in that** the second winding shaft (48) is housed in a housing (43).

7. Arrangement according to claim 6, **characterised in that** the housing (43) for the second winding shaft (48) comprises a guide rail (46) for the first blind sheet (19).

8. Arrangement according to claim 1, **characterised in that** the second blind sheet (21) has an associated guide rail (56), which runs approximately in extension of the first winding shaft (22).

9. Arrangement according to claim 1, **characterised in that** each winding shaft (22, 48) has an associated spring motor (27), by means of which the winding shaft (22, 48) is biased in the direction of a winding up of the respective blind sheet (19, 21).

10. Arrangement according to claim 1, **characterised in that** the first blind sheet (19) is fastened to a pull rod arrangement (26), which is located on the edge of the blind sheet (19) remote from the winding shaft (22).

11. Arrangement according to claim 10, **characterised in that** the pull rod arrangement (26) is guided at both ends in guide rails (31, 46).

12. Arrangement according to claim 10, **characterised in that** a drive device is provided for the first blind sheet (19), which comprises two linear pushing members (54, 82) that are guided to be secure against buckling and cooperate with the pull rod (26).

13. Arrangement according to claim 1, **characterised in that** the first winding shaft (22) is at least approximately conical.

14. Arrangement according to claim 1, **characterised in that** the central piece (38) comprises a receiving seating (51) for fastening a casing (53) of a pushing member (54) for the first blind sheet (19) guided to be secure against buckling.

15. Arrangement according to claim 1, **characterised in that** the central piece (3 8) comprises a receiving seating (66) for fastening a casing (65) of a pushing member (64) for the second blind sheet (21) guided to be secure against buckling.

16. Arrangement according to claim 1, **characterised in that** a drive motor (71) is provided, which has a driving gearwheel (74, 75, 76) for each pushing member (54, 64, 82), and that the working diameters of the driving gearwheels (674, 75, 76) are adapted to the respective stroke.

17. Arrangement according to claim 16, **characterised in that** the working diameters of all gearwheels (74, 75, 76) differ.

## Revendications

1. Agencement de store à enrouleur pour vitre, destiné à des vitres latérales (15), divisées par des montants verticaux , de portes latérales (7), dans des véhicules automobiles,
comprenant un premier axe d'enroulement (22) auquel une première bande de store (19) est fixée par un bord,
comprenant un deuxième axe d'enroulement (48) auquel une deuxième bande de store (21) est fixée par un bord,
comprenant au moins une première glissière (43) pour la première bande de store (20),
comprenant au moins une deuxième glissière (56) pour la deuxième bande de store (21), **caractérisé en ce que**
il comporte une pièce centrale (38) qui relie les deux glissières et présente des dispositifs de fixation (39, 42, 55) pour au moins les deux glissières (43, 56), ainsi qu'au moins un dispositif de support (41) pour au moins un des axes de store (22, 48), la pièce centrale (38), à l'état monté, étant fixée au-dessous du montant, à l'intérieur de la porte, et au-dessous du bord inférieur de vitre (20), sur des éléments porteurs de la porte latérale (7).

2. Agencement selon la revendication 1, **caractérisé en ce qu'**est associé au premier axe d'enroulement (22), un boîtier (23) qui présente deux capuchons d'extrémité (28, 39), un capuchon d'extrémité étant formé par la pièce centrale (38).

3. Agencement selon la revendication 1, **caractérisé en ce que** la pièce centrale (38) comporte un tourillon pour le premier axe d'enroulement (22).

4. Agencement selon la revendication 1, **caractérisé en ce que** les deux axes d'enroulement (22, 48) sont disposés l'un par rapport à l'autre en formant un angle qui est différent de 180°.

5. Agencement selon la revendication 4, **caractérisé en ce que** l'angle se situe aux alentours de 90°.

6. Agencement selon la revendication 1, **caractérisé en ce que** le deuxième axe d'enroulement (48) est logé dans un boîtier (43).

7. Agencement selon la revendication 6, **caractérisé en ce que** le boîtier (43) pour le deuxième axe d'enroulement (48) comprend une glissière (46) pour la première bande de store (19).

8. Agencement selon la revendication 1, **caractérisé en ce qu'**est associée à la deuxième bande de store (21), une glissière (56) qui s'étend à peu près dans le prolongement du premier axe d'enroulement (22).

9. Agencement selon la revendication 1, **caractérisé en ce qu'**est associé à chaque axe d'enroulement (22, 48), un moteur à ressort (27) par lequel l'axe d'enroulement (22, 48) est mis sous précontrainte dans le sens d'un enroulement de la bande de store (19, 21) respective.

10. Agencement selon la revendication 1, **caractérisé en ce que** la première bande de store (19) est fixée à un agencement de barre de traction (26) qui se trouve sur le bord de la bande de store (19) éloigné de l'axe d'enroulement (22).

11. Agencement selon la revendication 10, **caractérisé en ce que** l'agencement de barre de traction (26) est guidé à ses deux extrémités dans des glissières (31,46).

12. Agencement selon la revendication 10, **caractérisé en ce qu'**il est prévu un dispositif d'entraînement pour la première bande de store (19), qui comprend deux éléments de poussée (54, 82) linéaires, réalisés de manière à résister à la flexion, qui coopèrent avec la barre de traction (26).

13. Agencement selon la revendication 1, **caractérisé en ce que** le premier axe d'enroulement (22) est au moins approximativement conique.

14. Agencement selon la revendication 1, **caractérisé en ce que** la pièce centrale (38) comprend un logement (51) pour la fixation d'une enveloppe (53) d'un élément de poussée (54), réalisé de manière à résister à la flexion, pour la première bande de store (19).

15. Agencement selon la revendication 1, **caractérisé en ce que** la pièce centrale (38) comprend un logement (66) pour une enveloppe (65) d'un élément de poussée (64), réalisé de manière à résister à la flexion, pour la deuxième bande de store (21).

16. Agencement selon la revendication 1, **caractérisé en ce qu'**il est prévu un moteur d'entraînement (71) qui présente une roue dentée d'entraînement (74, 75, 76) pour chaque élément de poussée (54, 64, 82), et **en ce que** les diamètres actifs des roues dentées d'entraînement (74, 75, 76) sont adaptés à la course respective.

17. Agencement selon la revendication 16 **caractérisé en ce que** les diamètres actifs de toutes les roues dentées (74, 75, 76) sont différents les uns des autres.
